# EUROPÄISCHE PATENTSCHRIFT

(11) **EP 0 640 321 B1**
(45) Veröffentlichungstag und Bekanntmachung des Hinweises auf die Patenterteilung: **20.05.1998**
(21) Anmeldenummer: 94112539.5
(22) Anmeldetag: 10.08.1994
(51) Int. Cl.: A61C 1/08, F16K 15/14

(54) **Zahnärztliches Handstück mit Rückschlagventil**
Dental hand-piece with check valve
Pièce à main dentaire avec clapet anti-retour

(30) Priorität: 23.08.1993 DE 9312611 U
(43) Veröffentlichungstag der Anmeldung: 01.03.1995
(73) Patentinhaber: Sirona Dental Systems GmbH & Co.KG, 64625 Bensheim (DE)
(72) Erfinder: Bierbaum, Thomas, D-64653 Lorsch (DE)
(74) Vertreter: Isenbruck, Günter, Dr.

(56) Entgegenhaltungen:
- EP-A- 0 271 597
- US-A- 4 607 627
- PATENT ABSTRACTS OF JAPAN vol. 017, no. 131 (C-1036) 18. März 1993 & JP-A-04 307 057 (MASAHIRO TAGUCHI)

## Beschreibung

Die Erfindung bezeiht sich auf ein zahnärztliches Handstück, entsprechend dem Oberbegriff des Patentanspruches 1.

Ein derartiges Handstück ist beispielsweise aus EP-A-0 271 597 bekannt. Das Rückschlagventil dient dazu, nach Abschalten der Flüssigkeit ein Zurückfließen der Flüssigkeit in die Zuleitungswege zu verhindern und dabei zu vermeiden, daß aus dem Behandlungsbereich (Mundhöhle) aufgenommene Keime in den Gerätebereich gelangen können, der nach einer Behandlung nicht sterilisiert werden kann.

Bei dem bekannten Handstück ist das Rückschlagventil im Bereich des Kopfgehäuses des Handstückes angeordnet. Zu einem Austausch des Ventils ist ein Schraubdeckel am Kopfgehäuse abzunehmen und das im Kopfgehäuse angeordnete Antriebsaggregat herauszunehmen. Danach kann das Ventil aus dem Leitungskanal entnommen werden.

Wie eingangs bereits angesprochen, dient das Ventil dazu, einen Rückfluß der mit Keimen belasteten Flüssigkeit nach deren Abschaltung extern des Handstückes zu verhindern. Eine gezielte Rücksaugung zur Vermeidung einer Tropfenbildung an der Düsenaustrittsstelle wird mit diesem Ventil nicht erreicht.

Der im Anspruch 1 angegebenen Erfindung liegt die Aufgabe zugrunde, eine kostengünstige, von der Montage einfache Lösung anzugeben, mit der einerseits eine Tropfenbildung an der Düsenaustrittsöffnung vermieden und andererseits das Eindringen von Keimen in die geräteseitigen Teile, einschließlich des Versorgungsschlauches, an dem das Handstück anschließbar ist, vermieden werden kann. Diese Aufgabe wird von dem in Anspruch 1 definierten Handstück gelöst.

Ein Ausführungsbeispiel der Erfindung wird nachfolgend anhand der Zeichnung näher beschrieben. Es zeigen:
Figur 1 ein zahnärztliches Handstück in schaubildlicher Darstellung,
Figur 2 einen vergrößerten Ausschnitt des rückwärtigen Teil des Handstückes in einem Halb-/Längsschnitt,
Figuren 3 bis 5 verschiedene Ventilstellungen des in Figur 2 gezeigten Rückschlagventils.

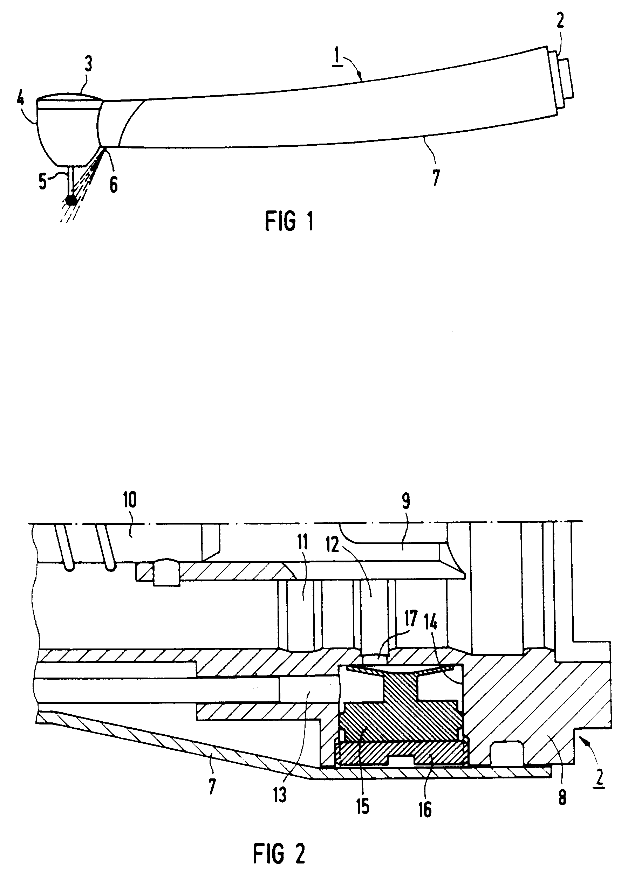

Die Figur 1 zeigt ein zahnärztliches Handstück mit einer Griffhülse 1, an deren einem Ende eine Anschlußarmatur 2 für den Anschluß eines nicht dargestellten Versorgungsschlauches und an deren anderem Ende ein Kopfteil 3 angeordnet ist, welches in bekannter Weise ein Kopfgehäuse 4 enthält, in dem ein in Rotation versetzbares Werkzeug 5 gelagert ist. Mit 6 ist die Austrittsdüse für ein fluides Kühlmittel, in der Regel Kühlwasser bzw. ein Gemisch aus Wasser und Luft, bezeichnet, mit dem die Werkzeugspitze bzw. die Präparationsstelle gekühlt werden kann.

Die Figur 2 zeigt in einem Halb-/Längsschnitt den rückwärtigen Teil des Handstückes. Aus der Darstellung ist ersichtlich, daß die Außenhülse 7 des Griffkörpers 1 einen Kupplungskörper 8 umgibt, der die Anschlußarmatur 2 beinhaltet. Dieser Kupplungskörper ist im vorliegenden Fall zur Aufnahme eines zapfenförmigen Anschlußteils eines Antriebsmotors ausgebildet und enthält demnach im Zentrum ein Drehmoment übertragendes Kupplungselement 9, welches mit einem zum Kopfgehäuse führenden Triebwellenabschnitt 10 verbunden ist. Mit 11 und 12 sind zwei Ringkanäle bezeichnet, mit denen Luft und Wasser von dem nicht dargestellten Kupplungsteil des Antriebsmotors zur Austrittsdüse 6 geleitet werden. Der Ringkanal 12, über den Wasser zugeführt wird, mündet in eine radial gerichtete und peripher offene Ausnehmung 14 im Kupplungskörper 8. In die Ausnehmung 14, die mit einem Leitungskanal 13 verbunden ist, ist ein anhand der nachfolgenden Figuren noch näher erläutertes Rückschlagventil 15 eingesetzt. Eine Stellschraube 16, mit der die Vorspannkraft des Ventils eingestellt werden kann, fixiert das Rückschlagventil in der Ausnehmung. Die äußere Begrenzung der Ausnehmung bildet die Außenhülse 7 des Griffkörpers, was den Vorteil hat, daß nach Abziehen der Außenhülse oder nach Herausziehen des Kupplungskörpers das Ventil leicht zugänglich ist.

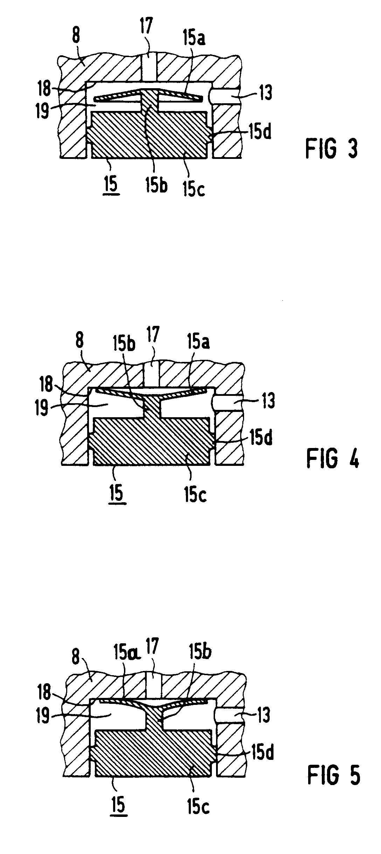

Das Rückschlagventil 15 enthält einen tellerförmig ausgebildeten, elastischen Abschnitt 15a, der den Schließkörper bildet, einen mittels eines dünnen Steges 15b verbundenen, nicht beweglichen Abschnitt 15c und ein am nicht beweglichen Abschnitt 15c angeformtes Dichtelement 15d. Der tellerförmige Abschnitt 15a umgibt den mit dem Ringkanal 12 verbundenen radialen Leitungskanal 17 so, daß der Tellerrand die Öffnung umschließt. Wie aus den Figuren 3 bis 5, die das Rückschlagventil 15 in der offenen Stellung (Fig. 3) im unbelasteten geschlossenen Zustand (Fig. 4) und im Zustand der Rücksaugung nach Abschalten der Flüssigkeitszufuhr (Fig. 5) zeigen, hervorgeht, liegt im unbelasteten geschlossenen Zustand (Fig. 4) der Tellerrand des Abschnittes 15a nur leicht, aber dichtend an einer die Mündungsöffnung 17 begrenzenden Fläche 18 an. Die Elastizität des Abschnittes 15a ist so gewählt, daß nach dem Abschalten der Flüssigkeitszufuhr infolge eines sich in der Zuleitung bildenden geringen Rücksaugeffekts nicht nur der Tellerrand an der Begrenzungsfläche 18 anliegt, sondern, wie aus Figur 5 hervorgeht, der Schließkörper mit einer sehr viel größeren Fläche an dieser Begrenzungsfläche anliegt. Das starke Anschmiegen des Schließkörpers führt zu einer Volumenvergrößerung der mit 19 bezeichneten Kammer, wodurch sich im Leitungskanal 13 ein geringer definierter Rücksaugeffekt einstellt, der eine Tropfenbildung an der Austrittsdüse 6 verhindert. Im Betriebsfall hebt die Dichtkante durch den anstehenden Druck von der Fläche 18 ab und gibt so den Durchfluß frei (Fig. 3).

Besondere Vorteile des erfindungsgemäßen Handstückes sind, daß die Rücksaugverhinderung direkt im Handstück vorhanden ist, wodurch sichergestellt ist, daß mit Keimen kontaminiertes Wasser nicht über das Handstück hinaus in den Versorgungsschlauch und damit in die geräteseitige Versorgung gelangen kann. Die innerhalb des Handstückes zurückgesaugte Menge ist relativ klein und nicht geräteabhängig.

Die vorzugsweise einteilige Ausbildung des Ventils gewährleistet eine sichere Funktion und einen leichten Austausch.

## Patentansprüche

1. Zahnärztliches Handstück, welches einen Kupplungskörper (8) enthält, in dem ein Leitungskanal (12, 13) zur Zufuhr einer Kühlflüssigkeit zu einer Austrittsdüse (6) am Kopfteil (3) des Handstückes angeordnet ist, wobei in Leitungskanal ein Rückschlagventil (15) angeordnet ist, welches einerseits einen beweglichen Abschnitt (15a) enthält, der als Schließkörper wirkt und in Abhängigkeit von Flüssigkeitsdruck die Mündungsöffnung (17) des Leitungskanals (12) verschließt oder freigibt und welches andererseits einen demgegenüber nicht beweglichen Abschnitt (15c) enthält, der den Leitungskanal nach außen hin abdichtet, und wobei der die Ausnehmung (14) zur Mantelfläche des Kupplungkörpers (8) hin abdichtende, nicht bewegliche Abschnitt (15c), der bewegliche Abschnitt (15a) und die Ausnehmung (14) eine Kammer (19) begrenzen, **dadurch gekennzeichnet,** daß der Leitungskanal (12, 13) eine radiale, die Mantelfläche des Kupplungskörpers (8) durchdringende Ausnehmung (14) enthält, in der das Rückschlagventil (15) angeordnet ist, und daß der bewegliche Abschnitt (15a) des Rückschlagventils (5) so geformt, und seine Elastizität so gewählt ist, daß er unmittelbar nach Abschaltor der Flüssigkeitszufuhr in Zustand einer Rücksaugung im Leitungskanal (12) mit einer größeren Dichtfläche an der Begrenzungsfläche (18) der Mündungsöffnung (17) anliegt als im unbelasteten geschlossenen Zustand, wodurch eine Vergrößerung des Volumens der Kammer (19) bewirkt wird und sich in dem zur Austrittsdüse führenden Leitungskanal (13) ein geringer definierter Rücksaugeffekt einstellt.

2. Zahnärztliches Handstück nach Anspruch 1, bei dem der den Schließkörper bildende Abschnitt (15a) tellerförmig ausgebildet ist und zumindest dieser Abschnitt aus einem elastischen Material besteht, wobei Form und Elastizität so gewählt sind, daß der Abschnitt im unbelasteten Zustand nur mit dem Tellerrand an einer Begrenzungsfläche (18) des Kupplungskörpers (8), welche die Mündungsöffnung des Zuleitungskanals (17) begrenzt, anliegt, hingegen der Schließkörperabschnitt nach Abschalten der Flüssigkeitszufuhr mit einer sehr viel größeren Fläche an der Begrenzungsfläche (18) anliegt.

3. Zahnärztliches Handstück nach Anspruch 2, bei dem der tellerförmige Abschnitt (15a) durch einen Mittelsteg (15b) mit dem nicht beweglichen Abschnitt (15c) verbunden ist und letzterer ein vorzugsweise angeformtes Dichtelement (15d) zur Abdichtung der Kammer gegenüber der peripheren Öffnung der Ausnehmung aufweist.

4. Zahnärztliches Handstück nach Anspruch 3, bei dem das Rückschlagventil aus einem einteiligen Formteil besteht.

5. Zahnärztliches Handstück nach einem der Ansprüche 1 bis 4, bei dem in der Ausnehmung (14) ein Stellelement (16) zur Einstellung der Vorspannkraft des Schließkörpers (15a) des Rückschlagventils (15) vorgesehen ist.

6. Zahnärztliches Handstück nach einem der Ansprüche 1 bis 5, bei dem die Ausnehmung (14) des Kupplungskörpers (8) peripher von der Außenhülse (7) des Handstückes begrenzt ist.

## Claims

1. Dental handpiece, which comprises a coupling body (8), in which there is arranged a duct (12, 13) for the supply of a cooling fluid to an outlet nozzle (6) on the head portion (3) of the handpiece, with there being arranged in the duct a non-return valve (15), which comprises on the one hand a movable section (15a), which acts as a closing body and closes or releases the mouth opening (17) of the duct (12) as a function of the hydrostatic pressure, and comprises on the other hand a section (15c), which is not movable with respect thereto and seals the duct with respect to the outside, and with the non-movable section (15c), which seals a recess (14) with respect to the lateral surface of the coupling body (8), the movable section (15a) and the recess (14) delimiting a chamber (19), characterised in that the duct (12, 13) comprises a radial recess (14), which penetrates the lateral surface of the coupling body (8) and in which the non-return valve (15) is arranged, and in that the movable section (15a) of the non-return valve (5 (sic)) is shaped in such a way, and its elasticity is selected in such a way, that, immediately after the fluid supply has been switched off, in the state of a suck-back in the duct (12), said section rests with a larger sealing surface against the delimiting surface (18) of the mouth opening (17) than in the unloaded closed state, as a result of which an increase in the volume of the chamber (19) is effected and a small defined suck-back effect ensues in the duct (13) which leads to the outlet nozzle.

2. Dental handpiece according to claim 1, in which the section (15a) which forms the closing body is constructed so as to be plate-like and at least this section consists of an elastic material, with shape and elasticity being selected in such a way that in the unloaded state, only the plate edge of the section rests against a delimiting surface (18) of the coupling body (8), which surface (18) delimits the mouth opening of the supply duct (17), while on the other hand, after the fluid supply has been switched off, a very much larger area of the closing body section rests against the delimiting surface (18).

3. Dental handpiece according to claim 2, in which the plate-like section (15a) is connected by a centre web (15b) to the non-movable section (15c) and the latter has a sealing element (15d), which is preferably pre-formed, for sealing the chamber with respect to the peripheral opening of the recess.

4. Dental handpiece according to claim 3, in which the non-return valve consists of a one-piece moulded part.

5. Dental handpiece according to one of claims 1 to 4, in which there is provided in the recess (14) an adjusting element (16) for adjusting the initial stressing force of the closing body (15a) of the non-return valve (15).

6. Dental handpiece according to one of claims to 5, in which the recess (14) of the coupling body (8) is peripherally delimited by the outer sleeve (7) of the handpiece.

## Revendications

1. Pièce à main dentaire, qui comprend un élément (8) d'accouplement, dans lequel une conduite (12, 13) servant à envoyer un liquide de refroidissement à une buse (6) de sortie est montée sur la pièce (3) de tête de la pièce à main, un clapet (15) anti-retour qui comprend, d'une part, une partie (15a) mobile, laquelle agit comme élément de fermeture et ferme ou dégage l'ouverture (17) d'embouchure de la conduite (12) en fonction de la pression de liquide, et qui comprend, d'autre part, une partie (15c) qui n'est pas mobile par rapport à la partie précédente et qui rend étanche la canalisation par rapport à l'extérieur, étant monté dans la conduite et la partie (15c) non mobile, rendant étanche l'évidement (14) par rapport à la surface latérale de l'élément (8) d'accouplement, la partie (15a) mobile et l'évidement (14) délimitant une chambre (19), caractérisée en ce que la conduite (12, 13) comprend un évidement (14) radial qui traverse la surface latérale de l'élément (8) d'accouplement et dans lequel le clapet (15) anti-retour est monté, et en ce que la partie (15a) mobile du clapet (15) anti-retour a une conformation et une flexibilité qui sont choisies de telle sorte que, immédiatement après l'arrêt de l'alimentation en liquide, en l'état d'une aspiration en retour dans la conduite (12), elle s'applique à la surface (18) de délimitation de l'ouverture (17) d'embouchure par une plus grande surface d'étanchéité qu'en l'état fermé non soumis à une charge, ce qui provoque une augmentation du volume de la chambre (19) et qui fait qu'il s'établit dans la conduite (13) allant à la buse de sortie un petit effet défini d'aspiration en retour.

2. Pièce à main dentaire suivant la revendication 1, dans laquelle la partie (15a) formant l'élément de fermeture est réalisée en forme d'assiette et dans laquelle au moins cette partie est en un matériau élastique, la forme et la flexibilité étant choisies de telle manière que, en l'état non soumis à une charge, la partie ne soit en contact que par le bord d'assiette avec une surface (18) de délimitation de l'élément (8) d'accouplement, qui délimite l'ouverture d'embouchure de la conduite (17) d'alimentation, et dans laquelle, en revanche, la partie formant l'élément de fermeture est en contact avec la surface (18) de délimitation par une surface beaucoup plus grande après arrêt de l'alimentation en liquide.

3. Pièce à main dentaire suivant la revendication 2, dans laquelle la partie (15a) en forme d'assiette est reliée par une barrette (15b) médiane à la partie (15c) non mobile et dans laquelle cette dernière partie comprend un élément (15d) d'étanchéité qui en est de préférence issu et qui sert à rendre étanche la chambre par rapport à l'ouverture périphérique de l'évidement.

4. Pièce à main dentaire suivant la revendication 3, dans laquelle le clapet anti-retour est constitué d'une pièce moulée d'une seule pièce.

5. Pièce à main dentaire suivant l'une des revendications 1 à 4, dans laquelle il est prévu dans l'évidement (14) un élément (16) de réglage pour régler la force de pré-tension de l'élément (15a) de fermeture du clapet (15) anti-retour.

6. Pièce à main dentaire suivant l'une des revendication 1 à 5, dans laquelle l'évidement (14) de l'élément (8) d'accouplement est délimité à la périphérie par le manche (7) extérieur de la pièce à main.
